Europäisches Patentamt

European Patent Office

Office européen des brevets

(11) Publication number: **0 059 619**
A1

(12) **EUROPEAN PATENT APPLICATION**

(21) Application number: **82300993.1**

(22) Date of filing: **25.02.82**

(51) Int. Cl.³: **B 29 D 23/01**
**B 29 D 23/10, B 29 F 5/00**

(30) Priority: **27.02.81 JP 29223/81**
**05.03.81 JP 32181/81**

(43) Date of publication of application:
**08.09.82 Bulletin 82/36**

(84) Designated Contracting States:
**AT BE DE FR IT NL SE**

(71) Applicant: **JUNKOSHA CO. LTD.**
**42-1, 1-chome Gotokuji**
**Setagaya-ku Tokyo 154(JP)**

(72) Inventor: **Kato, Hiroshi**
**286-50 Shimo-Yasumuatsu**
**Tokorozawa-shi Saitama(JP)**

(74) Representative: **Taylor, Derek George et al,**
**MATHISEN, MACARA & CO. European Patent Attorneys**
**Lyon House Lyon Road**
**Harrow Middlesex, HA1 2ET(GB)**

(54) Method of manufacturing porous tetrafluoroethylene tubes.

(57) A method of manufacturing a porous tetrafluoro-ethylene tube comprises forming a sheet of tetrafluoro-ethylene containing an additive, winding it into a tubular shape (1), wrapping reinforcing material (4) about the tubular shape to form a tubular product (5), rolling the tubular product (5) to give it a uniform wall thickness, preheating the tubular product (5) at a temperature lower than 327°C, stretching the tubular product (5) longitudinally, and heating it at a temperature higher than 327°C, while holding it in its stretched position.

*FIG. 2*

5 — 1 — 4

Croydon Printing Company Ltd.

EP 0 059 619 A1

## METHOD OF MANUFACTURING POROUS

## TETRAFLUOROETHYLENE TUBES

This invention relates to a method of manufacturing a porous tetrafluoroethylene tube.

A porous tetrafluoroethylene tube is usually manufactured by a method which comprises extrusion moulding a tubular tetrafluoroethylene product, stretching it longitudinally into a tube having a several times greater length to make it porous, and heating the tube at a temperature higher than 327°C, which is the melting point of tetrafluoroethylene, while it is held in its stretched length. According to this method, however, it is impossible to manufacture a strong tube, since no satisfactory intermolecular distribution can be obtained, but the molecules are oriented only in the direction of extrusion. Therefore, it is difficult to manufacture a porous tetrafluoroethylene tube having a small wall thickness or a small diameter.

A requirement exists for a satisfactory method for the manufacture of a porous tetrafluoroethylene tube having a small wall thickness and/or a small diameter.

According to the present invention, there is provided a method of manufacturing a porous tetrafluoroethylene tube, which comprises

forming a sheet of tetrafluoroethylene, winding said sheet into a tubular shape, wrapping reinforcing material about said tubular shape to form a tubular product, rolling said tubular product to give it a uniform wall thickness, preheating said tubular product at a temperature lower than 327ºC, stretching said tubular product longitudinally, and heating said tubular product at a temperature higher than 327ºC, while holding it in its stretched position.

A tetrafluoroethylene tube of laminated construction can be formed if the sheet in the method defined above is produced by laminating a plurality of sheets of tetrafluoroethylene having different directions of orientation, or laminating a plurality of sheets of tetrafluoroethylene having different physical properties, or disposing an active member between laminated sheets of tetrafluoroethylene.

The invention will now be particularly described by way of example, with reference to the accompanying drawings in which:-

Figure 1 is a view showing schematically the formation of a tubular product from a sheet of tetrafluoroethylene;

Figure 2 is a cross sectional view of the tubular product shown in Figure 1;

Figure 3 is a top plan view of the tubular product which is being rolled,

Figure 4 is a top plan view of the tubular product from which a thermally shrinkable tube is being removed;

Figure 5 is a top plan view of the tubular product thus having a uniform wall thickness;

Figure 6 is an end view of the tubular product shown in Figure 5; and

·Figure 7 is a top plan view of an apparatus which may be used for manufacturing any such tubular product continuously.

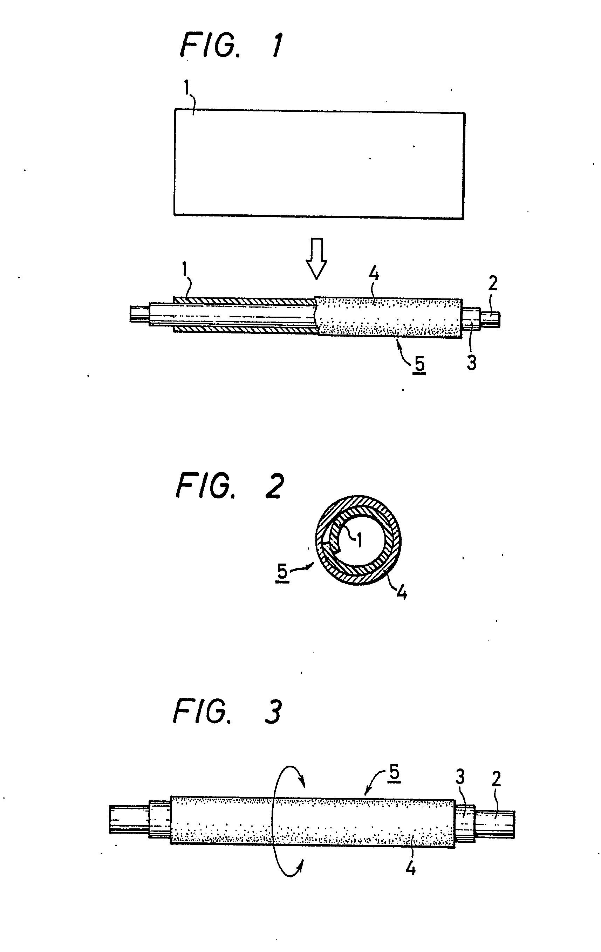

A paste of tetrafluoroethylene containing an additive for imparting wear resistance and/or to act as a lubricant is extrusion moulded, and the extruded product is reduced in thickness by rolling to form a sheet 1 of tetrafluoroethylene. The sheet 1 is wound about a thermally shrinkable tube 3 of tetrafluoroethylene provided about a roll 2, and reinforcing material 4 is applied about the sheet 1, whereby a tubular tetrafluoroethylene product 5 is formed, as shown in Figure 1. The tubular product 5 has a cross section which is shown in Figure 2. It has a greater wall thickness where the longitudinal edges of the sheet 1 overlap each other, than in any other portion thereof.

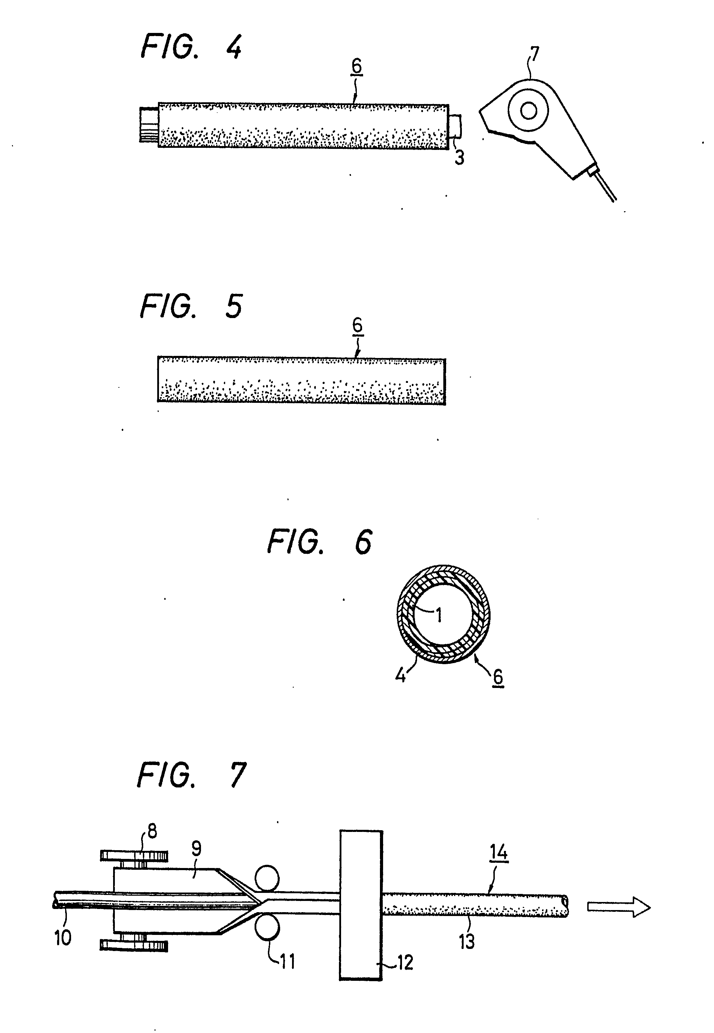

The tubular product 5 is rolled, for example between a pair of flat plates not shown, while it still surrounds the tube 3 and the roll 2 as shown in Figure 3, so that it may have a uniform wall thickness. The roll 2 is removed from the tubular product 6 of uniform wall thickness. The tubular product 6 is placed in an oven not shown, or a hot air blower 7 is employed as shown in Figure 4 to supply hot air into the tubular product 6, whereby the thermally shrinkable tube 3 is caused to shrink, and removed, as shown in Figure 5. The tubular product 6 has a uniform wall thickness as shown in Figure 6.

The tubular product 6 is mounted in a stretching machine not shown, and has its opposite ends clamped therein. It is preheated at a temperature lower than 327°C, or preferably at a temperature of, say, 200°C to 300°C, whereby the additive is removed. Then, it is stretched into a tube having, for example, about twice its original length, and made porous. The tube will usually have a stretch ratio of, say, 1.4 to 15. If it has a stretch ratio of 1.4, it can have a porosity of about 40%, while a stretch ratio of 15 provides a porosity of about 95%. If tetrafluoroethylene containing a filler is used, the tube may have a porosity of at least 80% if it is stretched to a length which is several times as large. Then, the tube is held in its stretched position, and heated at a temperature higher than 327°C, for example, at 350°C, for about 20 minutes, so that its shrinkage or deformation may be prevented. The tube is allowed to cool.

Referring now to Figure 7, there is shown a modified method of this invention which is adapted to manufacture a tube continuously. A sheet 9 of tetrafluoroethylene, which is supplied from a drum 8, is wound about a core 10 comprising a roll about which a releasing agent or a thermally shrinkable tube of tetrafluoroethylene is applied, while the sheet 9 has its longitudinal edges extending along the core 10, and guided by a pair of guide rollers 11. The tubularly formed sheet 9 is introduced into a wrapping machine 12 in which reinforcing material 13 is wrapped about the tubularly formed sheet 9 to form an elongated tubular product 14. The tubular product 14 is wound about a drum not shown, or the like.

The sheet 9 may be obtained by extrusion of tetrafluoroethylene, and rolling of the extruded product for reducing its thickness. If the sheet 9 has its molecules oriented in the same direction as that in which is was wound on the drum 8, it advantageously has a satisfactory intermolecular distribution, and hence a satisfactorily high strength. The strength of the sheet 9 can be further improved if it is formed by lamination of a plurality of sheets of tetrafluoroethylene having different directions of orientation. Tubular products having different desirable properties can be obtained by lamination of a plurality of sheets having different physical properties attained by incorporation of different types of fillers, or if another active member is disposed between laminated sheets of tetrafluoroethylene. The tubular product 14 is cut to form a porous tube having an appropriate length.

It is possible to use anything as reinforcing material 13 if it can prevent the tubularly shaped sheet 9 from expanding in diameter. It is, however, preferable to use a film, tape or sheet of tetrafluoroethylene having its molecules oriented about the tube, or unbaked porous tetrafluoroethylene stretched at a greater ratio than the tube. If the reinforcing material 13 comprises tetrafluoroethylene having its molecules oriented about the tube, it permits formation of a stabilised tube according to this invention, since it prevents expansion of the tube diameter, enables the tube to be freely stretched, and can be fused with the tetrafluoroethylene of the tube. The reinforcing material comprising stretched porous tetrafluoroethylene has improved strength. If the reinforcing material 13 comprises tetrafluoroethylene, it can advantageously be left around the tube. If it comprises another substance, it may be removed if required, after the tubular product has been rolled to obtain a uniform wall thickness.

While the additive which the sheet 1 or 9 contains can be removed at any time, it is preferable to remove it after the tubular product 5 or 14 has been rolled to obtain a uniform wall thickness, so that the rolling thereof, and the fusion of the reinforcing material with the tube, may be effected smoothly and satisfactorily.

When a lubricant additive is included in the mixture from which tetrafluoroethylene sheets are produced, the liquid additive is added to a mixture of finely powdered tetrafluoroethylene and, if desired, a filler to form a paste of tetrafluoroethylene. The paste is formed into pellets and the pellets are extrusion moulded into a tube.

Hitherto, if more than 10% by weight of filler was introduced into tetrafluoroethylene, the circumferential force holding the tube together was so small that the tube was likely to crack longitudinally resulting in great difficulty in preheating, stretching and heating thereof. By use of the present invention amounts of filler up to 95% can be successfully incorporated in tetrafluoroethylene. Such a filler can be, for example, titanium oxide, fluorinated graphite, graphite or carbon black.

In particular, if a filler is used, the sheet 1 can be formed by any of the following methods:-

(1) An aqueous dispersion containing 15 to 95% by weight of a filler is mixed with a dispersion of tetrafluoroethylene, and the mixture is stirred in a coagulator or mixer so that the filler is coagulated on the tetrafluoroethylene particles. Then, 20 to 200% by weight of a liquid lubricant is added into the mixture, and mixed thoroughly therewith, to form a paste of tetrafluoroethylene. The lubricant can be, for example, white oil, naphtha, an ester or silicone oil. The paste is formed into pellets, and these pellets are extrusion moulded into a sheet.

(2) A fine tetrafluoroethylene powder and a filler are mixed uniformly by a rotary mixer to form a mixture containing 15 to 95% by weight of the filler. A liquid lubricant is added into the mixture, and mixed thoroughly therewith to form a paste of tetrafluoroethylene. The paste is formed into pellets, and these pellets are extrusion moulded into a sheet.

(3) A mixture of a filler and a liquid lubricant is added into a fine tetrafluoroethylene powder in a twin-cylinder mixer, and mixed therewith thoroughly to form a paste of tetrafluoroethylene. The paste is formed into pellets, and these pellets are extrusion moulded into a sheet.

If required, and particularly if the sheet contains a large quantity of the filler, the sheet is rolled in a desired direction so that it is given improved orientation, or is rendered porous to provide improved strength.

The sheet 1 thus formed is wrapped about a thermally shrinkable tube 3 of tetrafluoroethylene surrounding a core 2 which defines a roll, reinforcing material 4 is wrapped about the sheet 1 to form a tubular product 5, and the steps of the process as described above, and illustrated in the drawings, are carried out.

Whether or not a filler is used, if the reinforcing material 4 comprises tetrafluoroethylene, it can be fused with the sheet 1, whereby a homogeneous tetrafluoroethylene tube is obtained. In this case, the lubricant is removed after the tubular product has been rolled to obtain a uniform wall thickness, so that such fusion may be promoted. If it is desired to stretch the tube further to increase its porosity, it is possible to use reinforcing material 4 of tetrafluoroethylene which is oriented about the tube. Such reinforcing material is sufficiently strong about the tube, and permits easy longitudinal stretching of the tube.

If the sheet contains a large quantity of the lubricant, it oozes out into the reinforcing material 4. If the reinforcing material 4 comprises tetrafluoroethylene having a low degree of orientation, the lubricant weakens the intermolecular retaining force of the reinforcing material 4, and the force with which it holds the tube about its circumference. It is, therefore, necessary to employ reinforcing material of tetrafluoroethylene which has been stretched satisfactorily, and given improved strength. It is necessary to use reinforcing material of tetrafluoroethylene having a sufficiently greater stretch ratio than the tube surrounded by the reinforcing material, so that the reinforcing material may not lose its circumferential retaining force when the tube is stretched.

If the reinforcing material 4 comprises any other material, it is unlikely to become fused with the sheet 1. In such a case, therefore, the reinforcing material 4 is better removed after the tubular product 6 having a uniform wall thickness has been formed, if required, and particularly if required for the longitudinal or circumferential stretching of the tube.

Then, if it is sufficient to produce a porous tetrafluoroethylene tube having such a low degree of porosity as can be obtained by various procedures such as extrusion or rolling, the tubular product 6 is heated at a temperature higher than 327°C, or preferably at 350°C, for about 20 minutes, so that the tetrafluoroethylene will not creep, thus producing a stabilized porous tetrafluoroethylene tube containing a filler.

When the tubular product 6 is heated, the lubricant can be removed therefrom by vaporization. Alternatively, the removal of the lubricant can be carried out prior thereto by heating, vacuum treatment, introduction of air, or otherwise.

If it is desired to produce a porous tetrafluoroethylene tube having a higher degree of porosity, the tubular product 6 is preheated at a temperature lower than 327°C, while the lubricant is removed, and the tubular product 6 is stretched longitudinally or circumferentially or both. In this case, the filler can only be present in an amount of 15 to 70% by weight. Then, the tubular product is held in its stretched position, and heated at a temperature higher than 327°C, or preferably at 350°, for about 20 minutes, so that the tetrafluoroethylene will not creep, thus producing a stabilized porous tetrafluoroethylene tube containing a filler.

In the porous tetrafluoroethylene tube of this invention, the porous tetrafluoroethylene is composed of nodes interconnected by fibrils, and at least the nodes contain 15 to 95% by weight of the filler. The filler thus provides a high degree of activity in the tube. It is economically possible, according to the invention, to manufacture a porous tetrafluoroethylene tube containing such a large quantity of a filler, whether it has a small and uniform wall thickness, or a small diameter and a uniform wall thickness, or a varying wall thickness.

8205:2PM1

## CLAIMS

1. A method of manufacturing a porous tetrafluoroethylene tube, which comprises forming a sheet of tetrafluoroethylene characterised by the further steps of winding said sheet into a tubular shape, wrapping reinforcing material about said tubular shape to form a tubular product, rolling said tubular product to give it a uniform wall thickness, preheating said tubular product at a temperature lower than 327°C, stretching said tubular product longitudinally, and heating said tubular product at a temperature higher than 327°C, while holding it in its stretched position.

2. A method according to claim 1, characterised in that said sheet is formed by extrusion moulding and subsequent rolling to reduce its thickness.

3. A method according to claim 1, characterised in that said sheet comprises a plurality of sheets having different directions of molecular orientation, and laminated one upon another, each of said sheets being formed by extrusion moulding and subsequent rolling to reduce its thickness.

4. A method according to claim 1, characterised in that said sheet comprises a plurality of sheets having different physical properties, and laminated one upon another.

5. A method according to claim 1, characterised in that said sheet comprises a plurality of sheets of tetrafluoroethylene laminated one upon another, and another active member disposed between each two adjacent sheets.

6. A method according to any one of claims 1 to 5, characterised in that the sheet of tetrafluoroethylene contains an additive for imparting wear resistance and/or acting as a lubricant, and further including the step of removing said additive from said tubular product before stretching it.

7. A method according to claim 6, characterised by further including the step of removing said reinforcing material from said tubular product before stretching it.

8. A method according to claim 7, characterised in that said reinforcing material comprises tetrafluoroethylene having its molecules oriented circumferentially of said tubular shape.

9. A method according to claim 7, characterised in that said reinforcing material comprises tetrafluoroethylene stretched at a greater ratio than said tubular shape.

10. A method according to any preceding claim characterised by the step of introducing 15 to 95% by weight of a filler into the tetrafluoroethylene material.

11. A method according to any preceding claim characterised by the steps of introducing a lubricant into the tetrafluoroethylene and removing the lubricant after the tubular product has been rolled.

12. A method according to any one of claims 1 to 9 characterised by the step of reacting a dispersion of tetrafluoroethylene with an aqueous dispersion of filler so that the filler is coagulated on the particles of said tetrafluoroethylene, and with a liquid lubricant, and extrusion moulding the resultant mixture to form said sheet of tetrafluoroethylene.

13. A porous tetrafluoroethylene tube, the material of the tube having been stretched and, after stretching, being composed of nodes interconnected by fibrils, said material containing a filler which is present at least in said nodes.

14. A porous tetrafluoroethylene tube which has been made by the method according to any one of claims 1 to 12.

15. A porous tetrafluoroethylene tube which has been made by wrapping a sheet of tetrafluoroethylene about a former to form a tube, wrapping a reinforcing material around said tube, applying pressure to render the tube uniform, the sheet having been treated at a stage in the process to render it porous, and heating the tube at a temperature above 327°C.

8205:2PM1

*FIG. 1*

*FIG. 2*

*FIG. 3*

*FIG. 4*

*FIG. 5*

*FIG. 6*

*FIG. 7*

**0059619**

Application number

European Patent Office

**EUROPEAN SEARCH REPORT**

EP 82 30 0993.1

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| Y | DE - B - 1 120 120 (RESISTOFLEX CORP.)<br>* claims 1 to 3 *<br>-- | 1,2 | B 29 D 23/01<br>B 29 D 23/10<br>B 29 F 5/00 |
| Y<br>A | DE - A - 2 219 811 (POLYGEST AG)<br>* claims 1, 4, 7 *<br>* claim 8 *<br>-- | 1,2<br>13 | |
| Y<br>A | FR - A - 2 218 987 (STEIGER ENGINEERING)<br>* claim 1 *<br>* claim 16 *<br>-- | 1,2<br>13 | TECHNICAL FIELDS SEARCHED (Int.Cl. 3)<br><br>B 29 C 15/00<br>B 29 C 17/00 |
| Y | CH - A - 461 785 (M. BOLLIGER)<br>* claim II *<br>-- | 1 | B 29 C 24/00<br>B 29 C 25/00<br>B 29 C 27/00<br>B 29 D 3/00<br>B 29 D 9/00 |
| Y | DE - C - 952 997 (E.I. DU PONT DE NEMOURS AND CO.)<br>* claims 1 to 4 *<br>-- | 1 | B 29 D 23/00<br>B 29 D 27/00<br>B 29 D 31/00<br>B 29 F 5/00 |
| A | DE - A - 1 935 896 (KEMPCHEN & CO. GMBH)<br>* claim 4 *<br>-- | 2,3 | CATEGORY OF CITED DOCUMENTS |
| A | DE - B - 1 529 954 (GARLOCK, INC.)<br>* claims 1, 7 *<br>-- | 7,8 | X: particularly relevant if taken alone<br>Y: particularly relevant if combined with another document of the same category<br>A: technological background<br>O: non-written disclosure<br>P: intermediate document<br>T: theory or principle underlying the invention |
| A | DE - B - 1 404 370 (R. GORE)<br>* claim 1; fig. 1 *<br>--<br>./.. | 1 | E: earlier patent document, but published on, or after the filing date<br>D: document cited in the application<br>L: document cited for other reasons |

&: member of the same patent family, corresponding document

| X | The present search report has been drawn up for all claims | |
|---|---|---|
| Place of search | Date of completion of the search | Examiner |
| Berlin | 19-05-1982 | FINDELI |

EPO Form 1503.1 06.78

**European Patent Office**

**EUROPEAN SEARCH REPORT**

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | FR - A - 1 259 806 (RESISTOFLEX CORP.)<br>-- | | |
| A | CH - A - 283 522 (GUMMI-WERKE<br>RICHTERSWIL AG)<br>-- | | |
| A | US - A - 2 783 173 (B.M. WALKER et al.)<br>---- | | |
| | | | **TECHNICAL FIELDS SEARCHED (Int. Cl.³)** |

EPO Form 1503.2 08.78